# EUROPÄISCHE PATENTSCHRIFT

(11) **EP 3 027 421 B1**
(45) Veröffentlichungstag und Bekanntmachung des Hinweises auf die Patenterteilung: **06.03.2019**
(21) Anmeldenummer: 14729885.5
(22) Anmeldetag: 05.06.2014
(51) Int. Cl.: B60B 7/00, B60B 7/12, B60B 7/06, B60B 27/00

(54) **SCHUTZKAPPE EINER IN SICH VOLLSTÄNDIG GEGENÜBER DER UMGEBUNG ABGEDICHTETEN RADLAGEREINHEIT**
PROTECTIVE CAP FOR A WHEEL-BEARING UNIT WHICH IS FULLY SEALED IN RELATION TO THE SURROUNDINGS
CAPUCHON DE PROTECTION D'UNE UNITÉ DE PALIER DE ROUE ÉTANCHÉIFIÉE EN TOTALITÉ PAR RAPPORT À L'ENVIRONNEMENT

(30) Priorität: 29.07.2013 DE 102013214744
(43) Veröffentlichungstag der Anmeldung: 08.06.2016
(73) Patentinhaber: Bayerische Motoren Werke Aktiengesellschaft, 80809 München (DE)
(72) Erfinder: DUDKOWIAK, Johann, 82343 Poecking (DE)
(86) Internationale Anmeldenummer: PCT/EP2014/061759
(87) Internationale Veröffentlichungsnummer: WO 2015/014518

(56) Entgegenhaltungen:
- EP-A1- 0 109 939
- EP-A1- 1 820 985
- WO-A1-01/10655
- US-A- 3 064 982
- US-B1- 6 758 531

## Beschreibung

Die Erfindung betrifft eine Schutzkappe einer in sich vollständig gegenüber der Umgebung abgedichteten Radlagereinheit, welche Einheit ein zentrales und am Fahrzeug zumindest bei nicht montiertem Rad sichtbares Sackloch aufweist, welches mittels der Schutzkappe optisch abdeckbar bzw. abgedeckt ist. Zum Stand der Technik wird neben der US 2003/0171153 A1 auf die unter der Marke FAG vertriebenen Radlager der 3.Generation der Fa. Schaeffler Technologies AG & Co. KG verwiesen, und weiterhin auf die US 6 758 531 B1, die WO 01/10655 und die US 3,064 982 A.

An der Radmittenzentrierung des Radflansches bzw. der Mitnehmerflanschnabe bekannter Radlagereinheiten, an welcher die Bremsscheibe verschraubt wird, befindet sich ein sichtbarer innerer Freiraum in Form eines Sacklochs. Dieser auch sog. Innenraum der Radmittenzentrierung ist serienmäßig in einem korrosionsanfälligem Stahlwerkstoff ausgeführt. Die unter der Marke FAG angebotenen Radlager der 2.Generation sind kompakte Einheiten, welche vom Radlager-Hersteller mit definierter Lagerluft sowie einer Schmierung für die gesamte Lebensdauer ausgeliefert werden und konsequenterweise mit einer außenseitigen Dichtung in Form einer absolut dichten Dichtkappe ausgestattet sind. Hinsichtlich ihrer Ausstattung und Kompaktheit noch weiter gesteigert sind die FAG-Radlager der 3.Generation in Form hochintegrierter Einheiten mit höchster Laufgenauigkeit, welche Radlager-Einheiten zwei Befestigungsflansche aufweisen, nämlich einen ersten für eine Bremsscheibe sowie das darauf anzubringende Rad und einen zweiten für die Befestigung dieser Radlagereinheit am Achskörper des Fahrzeugs. Hierbei ist ein in der äußere Seite der Radlagereinheit weiterhin vorhandenes Sackloch nicht durch eine Dichtungskappe oder dgl. abgedichtet, da sich eine geeignete Abdichtung der Radlager-Teile innerhalb der Radlager-Einheit befindet.

An einem Radlager der 3.Generation kann am besagten Sackloch somit Korrosion auftreten, was nicht nur für den Nutzer eines mit einer solchen Radlagereinheit ausgerüsteten Fahrzeugs optisch störend sein kann, sondern es kann sich im besagten Sackloch auch rosthaltiges Wasser sammeln, welches insbesondere bei Fahrt des Fahrzeugs auf an der Raglagereinheit montierte Leichtmetallräder gelangen und diese zumindest optisch, über längere Zeit jedoch auch tatsächlich schädigen kann. Das Vorsehen einer von den Radlagern der 2.Generation bekannten Dichtkappe würde dieses Problem zwar verhindern, jedoch stellte dies eine technisch und betriebswirtschaftlich viel zu aufwändige Problemlösung dar. Gleiches gilt für eine aus der US 6 758 531 B1 bekannte Schutzkappe, welche zusätzlich Öffnungen bspw. für Sensoren aufweist. Weitere mit verschließbaren Öffnungen versehene Schutzkappen für Radlagereinheiten zeigen die eingangs genannten Schriften US 3,064 982 A und WO 01/10655.

Hiermit soll nun eine Schutzkappe nach dem Oberbegriff des einzigen Patentanspruchs aufgezeigt werden, die einfach und funktional sinnvoll gestaltet in einem Sackloch gehalten wird (= Aufgabe der vorliegenden Erfindung). Die Lösung dieser Aufgabe ergibt sich mit den Merkmalen des einzigen Patentanspruchs.

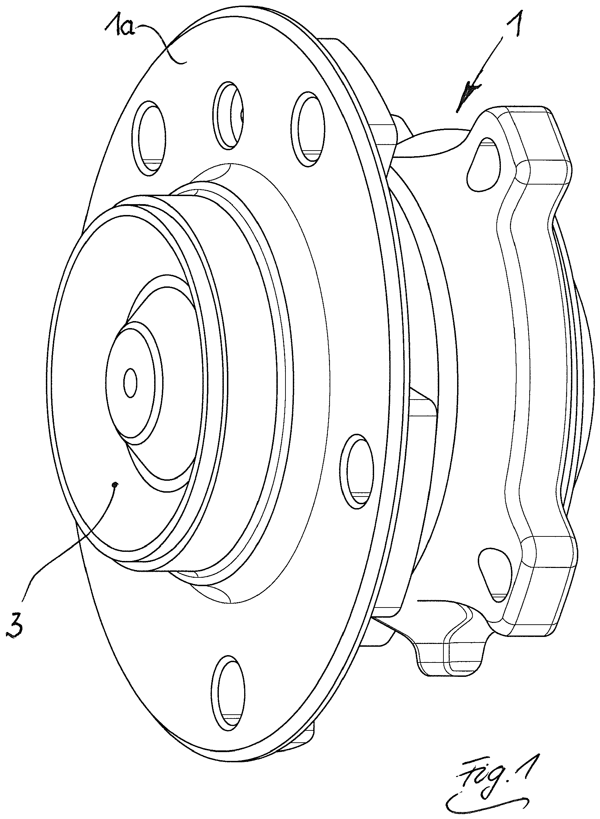

Die nähere Erläuterung erfolgt anhand der beigefügten Prinzipskizzen, ohne hierdurch die vorliegende Erfindung auf dieses gezeigte und beschriebene Ausführungsbeispiel zu beschränken - vielmehr können eine Vielzahl von Details durchaus abweichend gestaltet sein, ohne den Inhalt der Patentansprüche zu verlassen. Dabei zeigt **Fig.1** eine isometrische Ansicht einer Radlagereinheit mit einer erfindungsgemäßen Schutzkappe im in ein besagtes Sackloch einer Radlagereinheit eingebauten Zustand, **Fig.2** eine isometrische Ansicht der Schutzkappe von innen sowie **Fig.3** einen Schnitt durch den außenseitigen Flansch der Radlagereinheit mit darin eingesetzter Schutzkappe.

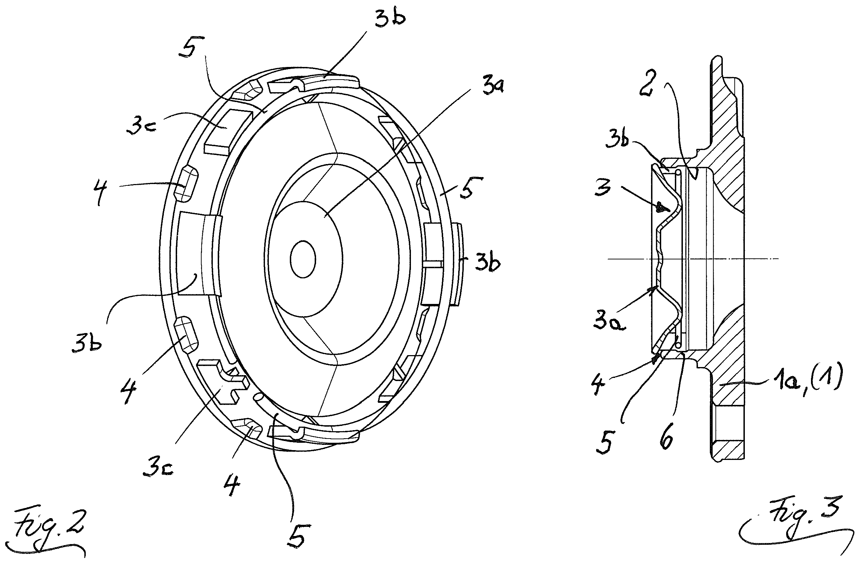

Mit der Bezugsziffer 1 ist eine in sich vollständig gegenüber der Umgebung abgedichtete Radlagereinheit gekennzeichnet, die - genauer deren außenseitiger Flansch 1a ein zentrales und am Fahrzeug zumindest bei nicht montiertem Rad sichtbares Sackloch 2 (vgl. insbesondere Fig.3) aufweist, welches mittels einer erfindungsgemäßen Schutzkappe 3 "optisch" abgedeckt ist. Diese Schutzkappe 3 ist kraftschlüssig und/oder formschlüssig im Sackloch 2 gehalten, jedoch bei Bedarf einfach demontierbar, und weist peripher zumindest eine, vorzugsweise mehrere über dem Umfang gleichmäßig verteilt vorgesehene Ablauföffnung(en) 4 für in das Sackloch 2 gelangendes Wasser oder dgl. auf. In das Sackloch 2 hinein gelangen kann auch bei montierter Schutzkappe 3 Spritzwasser während der Fahrt des Fahrzeugs, weil diese Schutzkappe 3 relativ einfach gestaltet ist und (beispielsweise für einen Tausch der Radlagereinheit 1) demontierbar sein muss und daher keine vollständige und folglich aufwändige Abdichtung ermöglicht.

Gehalten ist die im wesentlichen eine bei Projektion in Richtung der Drehachse der Radlagereinheit 1 kreisförmige Stirnwand 3a sowie von deren Rand im montierten Zustand in das Sackloch 2 hineinreichende Nasen 3b und Stützstegen 3c aufweisende Schutzkappe 3 über diese besagten Nasen 3b, welche in radialer Richtung nach außen mittels eines Federrings 5 vorgespannt an der Innenwand des Sacklochs anliegen bzw. in eine an dieser vorgesehenen umlaufenden Nut 6 eingreifen. Auch über die Stützstege 3c ist die Schutzkappe 3 an der Innenwand des Sacklochs 2 abgestützt. Für die Montage kann die Schutzkappe somit einfach in das Sackloch 2 hinein gedrückt werden, und im Bedarfsfall auch einfach herausgenommen werden.

Wie insbesondere aus Fig.3 hervorgeht ist die Stirnwand 3a in einem Teilbereich konisch geformt, so dass die Schutzkappe 3 quasi becherartig mit einem hier mehrfach gewölbten Boden (= Stirnwand 3a) geformt ist. Mit dieser konischen Formgebung im Bereich ihrer Stirnwand 3a kann an dieser Stirnwand 3a eine Zentrierungsfunktion und/oder Werkzeugaufnahmestelle dargestellt werden, so beispielsweise in Form einer Werkzeugaufnahme für ein Verschraubungsgerät zum Anbringen einer Bremsscheibe oder eines Rades am außenseitigen Flansch 1 der am Fahrzeug montierten Radlagereinheit 1. Bereit gestellt ist somit eine Schutzkappe 3 für die in Form der Wand des Sacklochs 2 wie üblich dargestellte Radmittenzentrierung, welche zum einen die Korrosion innerhalb des Sacklochs 2 verringert und vorteilhafterweise eine unästhetische Sicht auf einen möglicherweise korrodierten Innenraum dieses Sacklochs 2 verhindert. Die Schutzkappe 3 kann aus Kunststoff oder aus faserverstärktem Kunststoff bestehen, der gegenüber höheren Temperaturen, wie sie in diesem Bereich auftreten können, widerstandsfähig ist. Selbstverständlich können auch geeignete metallische Werkstoffe für diese Schutzkappe 3 zum Einsatz kommen. Die Verringerung der Korrosion im Innenraum der Radmittenzentrierung bzw. des Sacklochs 2 wird dabei durch ein sog. Wasserablaufsystem, welches am Rand der Stirnwand 3a Schutzkappe 3 in Form mehrerer dünner Ablauföffnungen 4 vorgesehen ist, realisiert. Damit kann zwar keine absolute Abdichtung des Sackloch-Innenraums dargestellt werden, so dass Wasser und Schmutz in den Innenraum des Sacklochs 2 gelangen können, jedoch kann das dort angesammelte Wasser über die Ablauföffnungen 4 auch wieder in die Umgebung abgeführt werden, so dass eine signifikante Ansammlung von Wasser im besagten Innenraum verhindert wird. Durch die Schleuderwirkung bei Fahrt des Fahrzeugs mit Drehen des Flansches 1a der Radlagereinheit 1 sammelt sich somit allenfalls in geringem Umfang Wasser oder Schmutz im Sackloch 2 an, so dass eine schwerwiegende Korrosion der Sackloch-Wand durch die vorgeschlagene Schutzkappe 3 einfach und erfolgreich verhindert werden kann.

## Patentansprüche

1. Schutzkappe einer in sich vollständig gegenüber der Umgebung abgedichteten Radlagereinheit (1), welche Einheit (1) ein zentrales und am Fahrzeug zumindest bei nicht montiertem Rad sichtbares Sackloch (2) aufweist, welches mittels der Schutzkappe (3) optisch abdeckbar oder abgedeckt ist, die kraftschlüssig und/oder formschlüssig sowie demontierbar im Sackloch (2) gehalten ist und peripher zumindest eine Ablauföffnung (4) für in das Sackloch (2) gelangendes Wasser oder dgl. aufweist,
**gekennzeichnet durch** an der Innenwand des Sacklochs (2) anliegende und durch einen Federring (5) radial nach außen gespannte Nasen (3b) und eine zumindest in einem Teilbereich konisch geformte Stirnwand (3).

## Claims

1. A protective cap of a wheel-bearing unit (1) which is fully sealed with respect to the surroundings, which unit (1) comprises a central blind bore (2), which is visible on the vehicle at least when the wheel has not been installed and which can be covered or is covered from view by means of the protective cap (3), which is held in the blind bore (2) in a force-fitting and/or form-fitting manner and such that it can be removed, and which has, on its periphery, at least a discharge opening (4) for water or the like which passes into the blind bore (2), **characterised by** lugs (3b), which bear against the inner wall of the blind bore (2) and by means of a spring ring (5) are biased radially outwardly, and by an end wall (3) which is conically shaped at least in part.

## Revendications

1. Capuchon de protection d'une unité de palier de roue (1) totalement étanche vis-à-vis de l'environnement, cette unité (1) comprenant un trou borgne central (2) visible sur le véhicule au moins lorsque la roue n'est pas montée, et qui peut être recouvert ou est recouvert optiquement au moyen du capuchon de protection (3) qui est maintenu dans le trou borgne (2) par une liaison par la force et/ou par une liaison par la forme en étant démontable, et comporte sur sa périphérie, au moins une ouverture d'évacuation (4) de l'eau ou similaire parvenant dans le trou borgne (2),
**caractérisé par**
des becs (3b) s'appliquant sur la paroi interne du trou borgne (2) et tendus radialement vers l'extérieur par une bague élastique (5) ainsi que par une paroi frontale (3) de forme conique au moins dans une zone partielle.
